Europäisches Patentamt

**European Patent Office**

**Office européen des brevets**

(11) Veröffentlichungsnummer: **0 300 164**
**A1**

(12) **EUROPÄISCHE PATENTANMELDUNG**

(21) Anmeldenummer: **88108450.3**

(22) Anmeldetag: **27.05.88**

(51) Int. Cl.⁴: **G01B 11/24**

(30) Priorität: **01.07.87 DE 3721749**

(43) Veröffentlichungstag der Anmeldung:
**25.01.89 Patentblatt 89/04**

(84) Benannte Vertragsstaaten:
**AT CH DE FR GB IT LI**

(71) Anmelder: **MAN Technologie GmbH**
**Dachauer Strasse 667 Postfach 50 04 26**
**D-8000 München 50(DE)**

(72) Erfinder: **Thieme, Werner, Dr.**
**Sommerstrasse 6**
**D-8047 Karlsfeld(DE)**

(54) **Verfahren und Vorrichtung zur berührungslosen Erfassung der Form von Gegenständen.**

㊼ Verharen und Vorrichtung zum optischen Messen der Form bzw. Formveränderung von Gegenständen (13) unter Anwendung des Lichtschnitt-Verfahrens. Zur präzisen Erfassung der Gestaltung eines Objekts wird eine inkohärente Strahlenquelle (21) verwendet, die mit einem Liniengitter (25) in mehrere parallel zueinander verlaufende Lichtebenen (27) aufgeteilt wird, derart, daß eine Strahlung mit sinusförmiger Intensitätsverteilung in Querrichtung der auf das Objekt projiziert wird. Mit der Strahlung (15) werden drei Aufnahmen des Objekts (13) aufgenommen, wobei die projizierte Strahlungsintensität durch geringe Verschiebung der Blende (25) jeweils um einen bestimmten Wert phasenverschoben wird.

Fig. 2

Die Erfindung bezieht sich auf ein Verfahren und eine Vorrichtung zum optischen Messen der Form bzw. Formänderungen von Gegenständen unter Anwendung des Lichtschnittverfahrens, bei dem der Gegenstand mit einer Strahlenquelle bestrahlt wird und die vom Gegenstand reflektierten Strahlen mit einem Detektor aufgenommen werden.

Optische Meßverfahren sind in verschiedenen Varianten bekannt. Eine gerätetechnisch einfache Methode ist das Lichtschnittverfahren, das darauf beruht, daß mit einer Projektionsoptik eine Lichtebene geformt wird, die mit dem Gegenstand unter einen Winkel zum Schnitt gebracht wird. Auf dem Objekt entsteht dadurch ein heller Linienzug, dessen Verlauf vom Projektionswinkel und von der Gestalt des Gegenstandes abhängt. Zur Erfassung einer Fläche des Gegenstandes wird dieser in eine Richtung bewegt. Das sich ergebende Streifenbild wird mit einer Kamera aufgenommen. Bei bekannten Projektionswinkeln läßt sich durch eine Bildanalyse die Objektgestalt entlang der Lichtschnittlinien ermitteln und prüfen. Derartige Geräte werden zur Kontrolle und Vermessung der Form von insbesondere Walz-, Zieh- und Stranggußerzeugnissen während des Ziehvorganges eingesetzt.

Für die Kontrolle bei der Herstellung von Band-Erzeugnissen nach den vorgenannten Verfahren ist die Lichtschnittmethode gut geeignet, weil die Lichtebene im Verlauf des Herstellungsprozesses die gesamte zu kontrollierende Fläche überstreift und weil bei derartigen Kontrollen nach gröberen Unregelmäßigkeiten gesucht wird. In der DE 28 55 877 C2 wird eine Anwendung zur kontinuierlichen, berührungslosen Vermessung der Schienenkopfoberfläche eines verlegten Gleises beschrieben, das nach dem vorstehenden Prinzip arbeitet.

Randunschärfen des Linienzuges und unterschiedliche Reflexionseigenschaften des Gegenstandes führen allerdings zu Ungenauigkeiten bei der Anwendung des Lichtschnittverfahrens. Außerdem müssen zur Vermessung der gesamten Fläche die linienbezogenen Meßdaten aus den einzelnen Aufnahmen aneinandergefügt werden, um die Informationen über die gesamte Fläche zu erhalten, nachdem das Prüfobjekt, das unter der Lichtebene hindurchgezogen wird, streifenweise abgetastet wurde.

Der Erfindung liegt die Aufgabe zugrunde, ein Verfahren der eingangs genannten Art zu entwickeln, mit dem eine flächendeckende und zugleich hochpräzise Information über die Gestalt des Gegenstandes erhalten werden kann.

Die Aufgabe wird erfindungsgemäß mit den im Anspruch 1 gekennzeichneten Merkmalen gelöst.

Mit diesem Verfahren wird der Gegenstand nicht nur entlang einer Linie sondern in der gesamten zu vermessenden Fläche beleuchtet, wodurch eine Bewegung des Objektes nicht mehr erforderlich ist und was sich in einer Beschleunigung des gesamten Meßvorganges auswirkt.

Ein weiterer Vorteil besteht darin, daß die über dieses Verfahren erhaltenen Meßdaten nach dem in der Interferometrie bekannten Phasenshift-Verfahren ausgewertet werden können, womit eine wesentliche Erhöhung der Genauigkeit von Streifenbildanalysen gegenüber dem konventionellen Lichtschnittverfahren erreichbar ist. Außerdem ist dabei die Auswertung unempfindlich gegenüber wechselnden Reflexionseigenschaften und Konturen des Gegenstandes.

Das Phasenshift-Verfahren, das in der Interferometrie verwendet wird, ist beispielsweise für holographische Interferogramme in der Zeitschrift Applied optics, Vol. 24, No. 14, 15.7.85, S. 2145, beschrieben. Die drei Interferogramme unterscheiden sich durch eine vorbestimmte Phasenverschiebung des Interferogramm-Musters. Für jedes Interferogramm i (i = 1,2,3) gilt für die gemessene Intensitätsverteilung $I_i$ über die Fläche (x,y) die Formel

$$I_i(x,y) = I_o(x,y) + K(x,y) [ \cos \phi (x,y) + \alpha_i ] \quad (1).$$

Dabei ist $I_o(x,y)$ die Hintergrundintensität, K(x,y) der Linienkontrast, $\alpha_i$ die Phasenverschiebung der Referenzstrahlung für das Hologramm i und $\phi(x,y)$ die Interferenz-Phase, in der die Information der Form oder der Kontur des Gegenstandes enthalten ist. Aus drei Gleichungen dieser Art, eine für jedes Interferogramm (i = 1,2,3) läßt sich schließlich die Interferenzphase $\phi$ für jeden Punkt (x,y) der Gegenstandsoberfläche bestimmen. Die Auswertung der Meßdaten kann elektronisch mit Bildverarbeitungssystemen durchgeführt werden.

Beim erfindungsgemäßen Verfahren brauchen aber keine Interferenzbilder für die Auswertung hergestellt werden, hier genügen Direktaufnahmen oder die direkte Erfassung und Verarbeitung der Intensitätsinformationen durch einen Detektor. Das erfindungsgemäße Verfahren hat gegenüber dem Interferenzverfahren den weiteren Vorteil, daß einfache Strahlenquellen, z.B. normale Lichtquellen sowie optische Anordnungen und Aufnahmetechniken verwendet werden können.

Für das Verfahren nach der Erfindung kann die Formel (1) unverändert auf die direkt vom Objekt abgestrahlte Intensitätsverteilung angewendet werden. Die Phasenverschiebung zwischen den verschiedenen Aufnahmen ist mittels einer nach den Ansprüchen 3 bis 5 gekennzeichneten Projektionsoptik durchführbar. Die mit Streifen versehene Gitterblende wird für jede folgende Aufnahme um einen vorbestimmten Abstand senkrecht zu den Streifen verschoben, so daß die sinusförmige Strahlenprojektion auf dem Gegenstand eine Phasenverschiebung erfährt.

Das erfindungsgemäße Projektionsgerät zeichnet sich durch seine technische Einfachheit aus. Als Strahlenquelle kann eine normale Lichtquelle, wie z.B. die Glühbirne eines Diaprojektors, verwendet werden, dessen Strahlen zu einem parallelen Strahlenbündel kollimiert werden. Das Strahlenbündel wird schließlich mit dem Liniengitter in mehrere Lichtebenen aufgeteilt, wobei die Strahlenintensität von einer Ebene zur anderen nicht stufenförmig verläuft, d. h. nicht scharfe Kanten hat, sondern eine sinusförmige Verteilung aufweist. Die sich kontinuierlich von Ebene zu Ebene verändernde Intensität erlaubt eine entsprechend kontinuierliche Erfassung und Bestimmung der Gestalt über die gesamte beleuchtete Fläche des Gegenstandes.

Die Erfindung erstreckt sich auf eine Vorrichtung zur Durchführung des Verfahrens nach Anspruch 1, mit einer Projektionsoptik, einem Objekthalter und einem Strahlendetektor. Die Vorrichtung kennzeichnet sich durch die Anwendung einer Projektionsoptik nach Anspruch 3 und einem flächenhaft aufzeichnenden Detektor, die in den entsprechenden Winkeln zum Objekthalter auf einer gemeinsamen Grundplatte angeordnet sind.

Der Objekthalter ist nicht beweglich auf der Arbeitsplatte gelagert, er bleibt nämlich, im Gegensatz zu den konventionellen Lichtschnittverfahren, während der Belichtungszeit unbewegt. Mittels eines Rechners wird ein Motor zur Verschiebung des Gitters der Projektionsoptik gesteuert, und es werden die Meßdaten aufgenommen und entsprechend der Datenanalyse ausgewertet. Als Detektor kann vorzugsweise eine CCD-Meßkamera (Charge-Coupled-Device-Meßkamera) verwendet werden, mit der punktweise die Informationen an den Rechner weitergegeben werden können. Die Verstellung der Blendenposition kann selbstverständlich mit jeder anderen bekannten manuellen oder gesteuerten Verschiebetechnik durchgeführt werden.

Die Erfindung wird anhand eines in der Zeichnung schematisch dargestellten Ausführungsbeispieles näher erläutert.

Es zeigen:

Fig. 1 das Ausführungsbeispiel,

Fig. 2 ein Schema der Projektionsoptik aus Fig. 1,

Fig. 3 auf den Gegenstand auftreffende Strahlenebenen,

Fig. 4 eine Gitterblende,

Fig. 5 ein Diagramm über eine Strahlenintensitätsverteilung und

Fig. 6 die Auswertung der Oberfläche eines Gegenstandes.

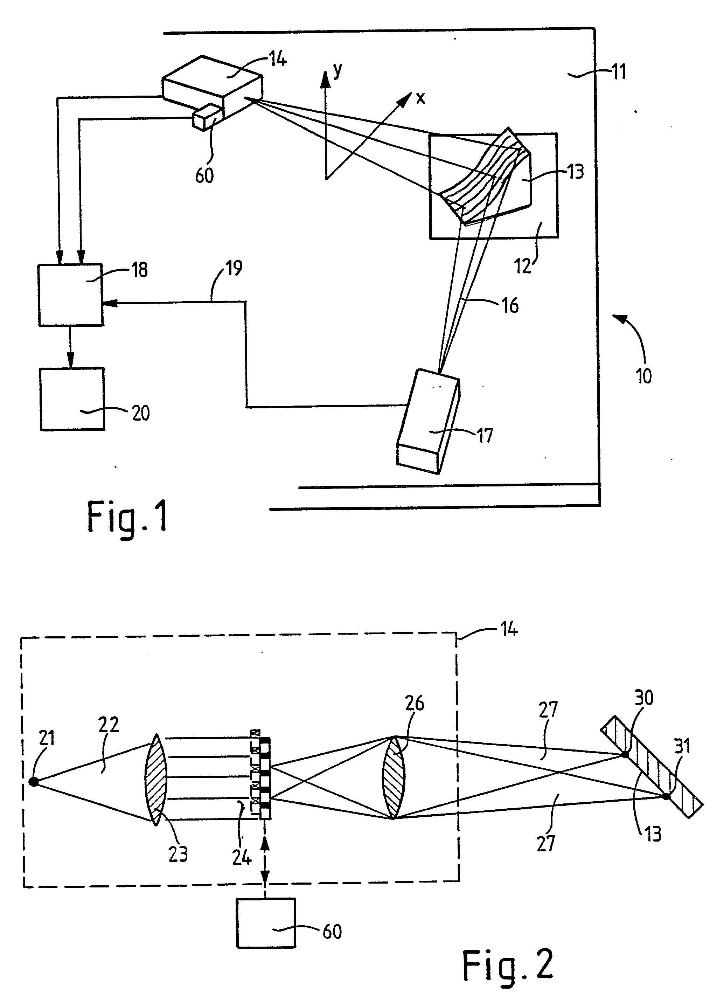

Fig. 1 zeigt schematisch eine Anordnung zum optischen Vermessen der Formgebung eines Gegenstandes nach der Erfindung. Die Vorrichtung 10 enthält eine Grundplatte 11 mit einem Objektträger 12, mit dem ein zu vermessender Gegenstand 13 mit der Grundplatte 11 verbunden wird, sowie eine Projektionsoptik 14, mit der eine Strahlung 15 auf den Gegenstand 13 projiziert wird. In dem Strahlungsweg der vom Gegenstand 13 reflektierten Strahlen 16 ist ein Detektor 17 angeordnet, der die Intensität der reflektierten Strahlen flächenhaft aufnimmt und an einen Rechner 18 weitergibt. Der Rechner 18 wertet die Intensitätssignale 19 aus und gibt das Resultat an ein Anzeigegerät 20 weiter, das das Resultat optisch aufzeichnet.

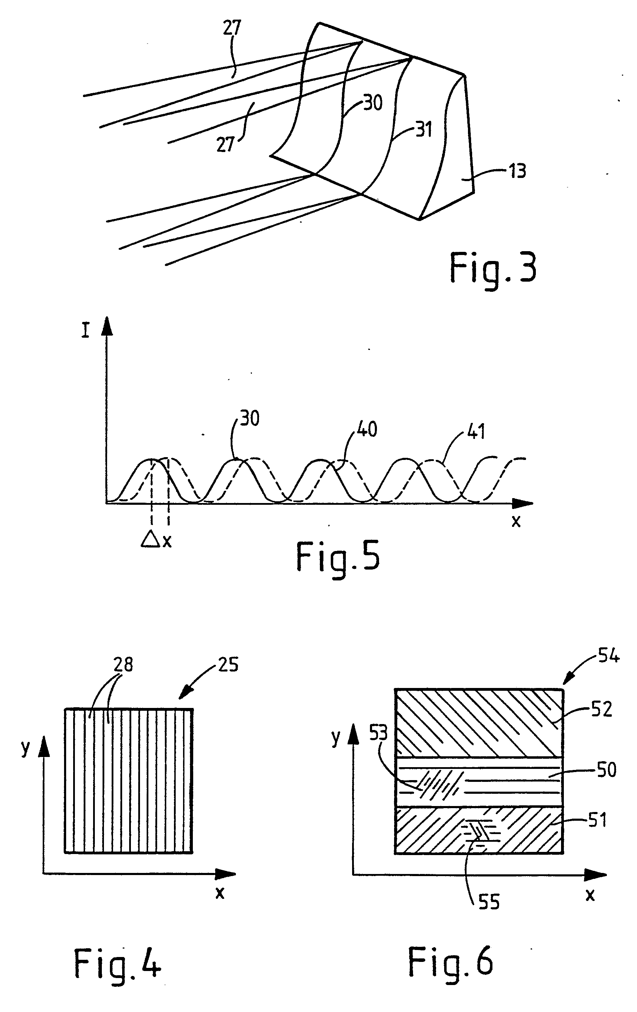

Die Projektionsoptik 14 ist in Fig. 2 näher dargestellt. Sie enthält eine inkohärente Strahlenquelle 21, die sowohl aus dem sichtbaren als auch dem nicht sichtbaren Bereich sein kann. In einer einfachen Ausführung wird eine Glühlampe zwischen 10 und 1000 Watt verwendet. Die ausgegebenen Strahlen, z.B. Lichtstrahlen 22, werden mittels eines Kollimators 23 in ein paralleles Lichtbündel 24 umgesetzt und mittels einer Gitterblende 25 und einem Projektionsobjektiv 26 in mehrere Lichtebenen 27 umgeformt. In Fig. 3 sind zwei Lichtebenen 27 in Schrägansicht dargestellt. Die entsprechenden Schnittlinien 30 bzw. 31 mit dem Gegenstand 13 folgen der Kontur des Gegenstandes 13 an der jeweiligen Projektionslinie.

Das Gitter 25 besteht aus einem Liniengitter, entsprechend einer Aneinanderreihung vieler schlitzförmiger Blenden 28, wie es in Fig. 4 dargestellt ist. Das Liniengitter 25 kann ein im Ätzverfahren hergestelltes Gitter oder aber auch ein entsprechend belichtetes Dia sein. Die Liniendichte des Gitters 25 liegt im Bereich von 1 bis 4 Linien/mm. Die Zusammenwirkung des inkohärenten Lichtes mit dem Gitter 25 führt zu einer sinusförmigen Intensitätsverteilung von Lichtebene 27 zu Lichtebene 27. Wählt man, wie in Fig. 4 dargestellt, ein Koordinatensystem xy parallel zur Blende 25, wobei die Koordinate x quer zu den Blendenöffnungen 28 liegt, so läßt sich der Intensitätsverlauf in der x-Richtung, wie in Fig. 5 gezeigt, durch eine (sinus + 1)-Kurve 40 darstellen. Die Intensität der vom Gegenstand 13, der mit einer derartigen Strahlung beleuchtet wird, reflektierten Strahlung 16 hat eine von der Fläche xy abhängende Intensität $I_i$, die der Gleichung (1) folgt. Dem Gitter 25 ist ein Schrittmotor 28 zugeordnet, mit dem das Gitter 25 in x-Richtung hin- und her verschiebbar ist. Bei der Durchführung eines Meßprozesses werden drei Aufnahmen vom Objekt 13 gemacht. Zwischen jeder Aufnahme wird das Gitter 25 um einen vorbestimmten Betrag $\Delta x$ in eine Richtung verschoben. In Fig. 2 soll das schwächer dargestellte Gitter 25' eine um $\Delta x'$ verschobene Stellung darstellen. Um es darstellen zu können, wurde die verschobene Stellung neben die ursprüngliche Gitterstellung 25 gezeichnet.

In der Gleichung (1) sind drei Unbekannte enthalten, nämlich die Hintergrundintensität $I_0$, die ort-

sabhängige Konstante K sowie die zu messende Interferenzphase φ. Um die Funktion φ (x,y) präzise auswerten zu können, werden drei Aufnahmen hintereinander gemacht, bei denen das Strahlungsfeld 15 jeweils durch eine geringe Verschiebung in x-Richtung des Gitters 25 um einen entsprechenden Winkel α geschwenkt wird. Dabei ergibt sich auf dem Gegenstand 13 eine Phasenverschiebung Δx. Diese Verschiebung ist in der Fig. 5 mit der gestrichelten Kurve 41 dargestellt. Der Verstellweg Δx' des Gitters 25 liegt im Bereich des 1/3 des Linienabstandes des Liniengitters. Mit jeder Aufnahme i (i = 1,2,3) erhält man für jeden Punkt (x,y) des Gegenstandes 13 eine reflektierte Strahlung mit der Intensität $I_i$, für die die vorerwähnte Formel (1) gilt und die mit dem Detektor 17 erfaßt wird.

Aus drei Gleichungen mit den zugehörigen Meßwerten $I_i$ und den vorbestimmten Phasenverschiebungen $α_i$, die durch die Verschiebung des Gitters realisiert werden, läßt sich schließlich die Interferenzphase φ(x,y) für jeden Punkt der bestrahlten Fläche des Gegenstandes 13 genau errechnen. Die errechneten Werte können schließlich nach bekannten Verfahren in eine optische Darstellung umgerechnet werden, wie z.B. in Darstellungen mit verschiedenen Grautönen oder mit unterschiedlichen Farben. Bei den farblichen Darstellungen werden die Erhebungen mit einer ersten Farbe, die Vertiefungen mit einer zweiten und die als Referenz gewählte Ebene mit einer dritten Farbe gekennzeichnet, wobei die jeweilige Farbenstärke der Reliefstärke proportional ist.

In Fig. 6 wird die bestrahlte Fläche des Gegenstandes 13 beispielsweise durch unterschiedliche Schraffierung dargestellt. Der mit horizontalen Strichen versehene Mittelbereich in y-Richtung stellt die Referenzebene 50 dar. Der untere Bereich, der gegenüber der Ebene 50 hervorsteht, ist mit nach rechts abgeschrägten Strichen 51 versehen, wobei die Dichte der Striche mit dem Niveauunterschied zur Referenzebene 50 ansteigt.

Der obere Bereich ist mit nach links abgeschrägten Strichen 52 belegt, die eine Vertiefung darstellen. Auf diese Weise ist die Kontur der Oberfläche des Gegenstandes 13 bildlich dargestellt, so daß nicht nur die makroskopische Kontur des Gegenstandes 13, sondern auch Unregelmäßigkeiten bzw. Fehler deutlich darstellbar sind. Im Bild 54 stellen solche Fehler beispielsweise die Bereiche 53 und 55 dar, wobei die Stelle 53 eine Erhebung im Bereich 50 und die Stelle 55 eine kleine Vertiefung im hervorgehobenen Bereich sind.

Mit dem erfindungsgemäßen Verfahren können Formen sowie Formänderungen als auch Oberflächenqualitäten bestimmt bzw. kontrolliert werden.

## Ansprüche

1. Verfahren zum optischen Vermessen der Form bzw. Formänderung von Gegenständen unter Anwendung des Lichtschnitt-Verfahrens, bei dem der Gegenstand mit einer Strahlenquelle beleuchtet wird und die vom Gegenstand reflektierten Strahlen mit einem Detektor aufgenommen werden, dadurch gekennzeichnet, daß der Gegenstand (13) mit mehreren, nichtkoinzidenten Strahlenebenen (27) einer inkohärenten Strahlung (15) beleuchtet wird, dessen Intensitätsverteilung (I) quer zu den Strahlenebenen einer Sinus- oder Kosinus-Verteilung folgt, und daß das Reflexionsbild mit einem flächenhaft aufzeichnenden Detektor aufgenommen und schließlich ausgewertet wird.

2. Verfahren nach Anspruch 1, dadurch gekennzeichnet, daß der Gegenstand (13) dreimal nacheinander beleuchtet und aufgenommen wird, wobei zwischen jeder Aufnahme eine Phasenverschiebung ($α_i$) der Projektionsstrahlung (15) erfolgt.

3. Projektionsoptik zur Erzeugung der Strahlenebenen nach Anspruch 1 mit einer Strahlenquelle, einem im Strahlengang angeordneten Kollimator sowie eine nachgeordnete Blende, dadurch gekennzeichnet, daß als Blende ein optisches Gitter (25) mit parallel zueinander verlaufenden strahlendurchlässigen Bereichen (28) vorgesehen ist, durch das der Strahlenbündel (24) in nebeneinander verlaufende Strahlenebenen (27) aufteilbar ist, und daß das Gitter (25) senkrecht zu den Strahlenebenen (27) verschiebbar angeordnet ist.

4. Projektionsoptik nach Anspruch 3, dadurch gekennzeichnet, daß das Gitter (25) ein mit Streifenmuster versehenes Diabild ist.

5. Projektionsoptik nach Anspruch 3 oder 4, dadurch gekennzeichnet, daß dem Gitter (25) ein elektronisch steuerbarer Schrittmotor (28) zugeordnet ist.

6. Vorrichtung zur Durchführung des Verfahrens nach Anspruch 1 mit einer Projektionsoptik, einem Objekthalter und einem Strahlendetektor, dadurch gekennzeichnet, daß die Projektionsoptik (14) eine nicht kohärente Lichtquelle (21) und eine Gitterblende (25) enthält, mit der mehrere parallele Strahlenebenen (27) erzeugbar sind, daß das Gitter (25) der Projektionsoptik quer zur Strahlenrichtung verschiebbar angeordnet, und daß ein flächenhaft aufzeichnender Strahlendetektor (17) vorgesehen ist.

Fig.1

Fig.2

Fig.3

Fig.5

Fig.4

Fig.6

# Europäisches Patentamt

# EUROPÄISCHER RECHERCHENBERICHT

| EINSCHLÄGIGE DOKUMENTE | | | EP 88108450.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | US - A - 4 641 972 (HALIOUA) | 1,3,6 | G 01 B 11/24 |
| A | * Gesamt; insbes. Fig. 7; Spalte 7, Zeile 39ff * | 2 | |
| Y | | 4 | |
| | -- | | |
| Y | US - A - 4 269 513 (DI MATTEO) | 4 | |
| | * Gesamt * | | |
| | -- | | |
| A | US - A - 4 335 962 (DI MATTEO) | 1,3,6 | |
| | * Gesamt * | | |
| | -- | | |
| A | US - A - 4 653 104 (TAMURA) | 1,3,6 | |
| | * Gesamt * | | |
| | ---- | | |

| RECHERCHIERTE SACHGEBIETE (Int. Cl.4) |
|---|
| G 01 B 9/00 |
| G 01 B 11/00 |

Der vorliegende Recherchenbericht wurde für alle Patentansprüche erstellt.

| Recherchenort | Abschlußdatum der Recherche | Prüfer |
|---|---|---|
| WIEN | 14-11-1988 | TOMASELLI |